# EUROPÄISCHE PATENTSCHRIFT

(11) **EP 2 838 807 B1**
(45) Veröffentlichungstag und Bekanntmachung des Hinweises auf die Patenterteilung: **03.02.2016**
(21) Anmeldenummer: 13717010.6
(22) Anmeldetag: 10.04.2013
(51) Int. Cl.: B65D 25/36, B65D 1/26, B29C 51/30

(54) **KOMBI-VERPACKUNGSBEHÄLTER**
COMBINATION PACKAGING CONTAINER
RÉCIPIENT D'EMBALLAGE COMBINÉ

(30) Priorität: 16.04.2012 AT 4532012
(43) Veröffentlichungstag der Anmeldung: 25.02.2015
(73) Patentinhaber: Rundpack AG, 9444 Diepoldsau (CH)
(72) Erfinder: RIETHMÜLLER, Steffen, CH-9443 Widnau (CH)
(74) Vertreter: Burger, Hannes
(86) Internationale Anmeldenummer: PCT/EP2013/057503
(87) Internationale Veröffentlichungsnummer: WO 2013/156369

(56) Entgegenhaltungen:
- EP-A1- 0 102 522
- DE-U1-202005 009 978
- DE-U1-202007 016 006
- DE-U1-202011 004 316
- JP-A- 2009 220 862
- US-A- 5 108 805

## Beschreibung

Die Erfindung betrifft einen Kombi-Verpackungsbehälter, wie dieser im Anspruch 1 beschrieben ist.

Aus der DE 20 2005 049 978 U1 ist ein Kombi-Verpackungsbehälter umfassend einen becherförmigen Innenbehälter mit einem Behältermantel, einem Boden und mit einem im Bereich seines offenen Endes den Behältermantel nach außen überragenden Flansch bekannt geworden. Ein Teilabschnitt des Bodens bildet eine Aufstandsfläche aus. Ein manschettenförmiges Außenteil umgibt den Innenbehälter an seinem Behältermantel und weist in Richtung einer Längsachse voneinander distanzierten Endbereichen auf, bei dem der erste Endbereich dem Flansch und der weitere Endbereich dem Boden des Innenbehälters zugewendet ist. Der Behältermantel und das manschettenförmige Außenteil bilden eine Behälterwand aus. Zum Ineinanderstapeln von mehreren gleichartigen Kombi-Verpackungsbehältern sind erste und weitere zusammenwirkende Stützmittel vorgesehen. Die Stufenfläche ist in axialer Richtung von der durch den Boden gebildeten Aufstandsfläche in Richtung auf das offene Ende distanziert angeordnet. Der weitere Endbereich des manschettenförmigen Außenteils endet im Bereich der Stufenfläche.

Die JP 2009-220862 A beschreibt einen anderen Kombi-Verpackungsbehälter mit einem becherförmigen Innenbehälter, der an seinem Behältermantel von einem manschettenförmigen Außenteil umgeben ist. Der Behältermantel und das manschettenförmige Außenteil bilden eine Behälterwand aus, wobei das manschettenförmige Außenteil in Richtung einer Längsachse voneinander distanzierten Endbereichen aufweist, bei dem der erste Endbereich dem Flansch und der weitere Endbereich dem Boden des Innenbehälters zugewendet ist. In einem Übergangsabschnitt zwischen dem Boden und dem Behältermantel ist ausgehend vom Behältermantel eine in radialer Richtung auf die Längsachse rückspringende sowie umfänglich durchgehende Stufe mit einer dem Boden zugewendeten Stufenfläche ausgebildet. Die Stufenfläche ist in axialer Richtung von der durch den Boden gebildeten Aufstandsfläche in Richtung auf das offene Ende distanziert angeordnet. Der weitere Endbereich des manschettenförmigen Außenteils die Stufenfläche in Richtung auf die Aufstandsfläche des Bodens.

Die DE 20 2007 016 006 U1 beschreibt einen Behälter zum Aufnehmen flüssiger und/oder pastöser Produkte, mit einer eine innere Begrenzungsfläche des Behälters bildenden becherartigen Schale. An einer äußeren Begrenzungsfläche der Schale ist eine diese zumindest teilweise abdeckende Abdeckung aus bedruckbarem Material angeordnet. Die Schale weist einen sich von einer oberen Öffnung in Richtung auf einen Bodenbereich verjüngenden Mantelbereich auf. Bodenseitig ist ein die Abdeckung untergreifender sowie radial darüber hinaus vorvorragender umlaufender Wulst am Behälter ausgebildet, welcher eines der Stützmittel ausbildet. Oberhalb des Wulstes ist ein konterkonischer Hinterzug ausgebildet, welcher über einen stufenförmigen Absatz in den Mantel übergeht. Der stufenförmige Absatz bildet ein weiteres Stapelmittel aus, um gleichartig ausgebildete Behälter ineinander stapeln zu können. Die Abdeckung überragt den stufenförmigen Absatz und ist am Wulst abgestützt.

Einen anderen Kombi-Verpackungsbehälter beschreibt die US 5,108,805 A. Dieser weist einen becherförmigen Innenbehälter mit einem Behältermantel, einem Boden und mit einem im Bereich seines offenen Endes den Behältermantel nach außen überragenden Flansch auf. In einem Übergangsabschnitt zwischen dem Boden und dem Behältermantel ist ausgehend vom Behältermantel eine in radialer Richtung auf die Längsachse rückspringende sowie umfänglich durchgehende Stufe mit einer dem Boden zugewendeten Stufenfläche ausgebildet. Ein manschettenförmiges Außenteil umgibt den Innenbehälter an seinem Behältermantel und weist in Richtung einer Längsachse voneinander distanzierten Endbereichen auf, bei dem der erste Endbereich dem Flansch und der weitere Endbereich dem Boden des Innenbehälters zugewendet ist. Der weitere Endbereich des manschettenförmigen Außenteils endet im Bereich der Stufenfläche.

Die DE 20 2011 004 316 U1 beschreibt einen weiteren Kombi-Verpackungsbehälter. Dieser weist einen becherförmigen Innenbehälter mit einem Behältermantel, einem Boden und mit einem im Bereich seines offenen Endes den Behältermantel nach außen überragenden Flansch auf. In einem dem Boden benachbarten Abschnitt des Behältermantels ist eine ringförmig umlaufende Nut ausgebildet. Ein manschettenförmiges Außenteil umgibt den Innenbehälter an seinem Behältermantel und weist in Richtung einer Längsachse voneinander distanzierten Endbereichen auf, bei dem der erste Endbereich dem Flansch und der weitere Endbereich dem Boden des Innenbehälters zugewendet ist. Das manschettenförmige Außenteil weist eine komplementär zur Nut ausgebildete Einkerbung auf, welche in die Nut eingreift. Der weitere Endbereich des manschettenförmigen Außenteils überragt die Nut in Richtung auf den Boden.

Ein Verfahren zur Herstellung eines konischen Kunststoffbehälters mit einem nach außen abstehenden Öffnungsrand durch Tiefziehen ist aus der DE 33 26 369 C2 bzw. der EP 0 102 522 A1 bekannt geworden. Dabei wird der Kunststoffbehälter durch Tiefziehen einer Kunststofffolie gleichmäßiger Dicke gebildet, wobei der Kunststoffbehälter in der Tiefziehform mit einer Schicht aus einem andersartigen Material verbunden wird, welches jedoch mit dem Kunststoffmaterial nicht verschweißt. Diese Schicht aus dem andersartigen Material wird in Form einer Manschette gebildet, welche vor dem Tiefziehen in der Tiefziehform so angeordnet wird, dass ihre Unter- und Oberkante beim Tiefziehen von der Kunststofffolie eingeschlossen wird. Dabei kann die Folie beim Tiefziehen in dem für den Kontakt mit der Manschette vorgesehenen Bereich auf eine minimale, die Dichtigkeit des herzustellenden Behälters gewährleistende Dicke gezogen werden. Zum Stapeln mehrerer gleichartiger Behälter ist im Bereich seines offenen Endes eine nach außen abstehende Stapelschulter vorgesehen, welche sich im Bereich des offenen Endes an dem nach außen abstehenden Öffnungsrand des weiteren Behälters abstützt. Der Wandabschnitt zwischen der Stapelschulter und dem Öffnungsrand ist dabei gegenkonisch bezüglich des zum Boden hin verlaufenden Wandabschnitts ausgebildet, um so die Stapelbildung zu ermöglichen. Dabei war in eigenen Arbeitsvorgängen einerseits die Stapelschulter vor dem Tiefziehen in die Manschette einzuprägen und andererseits das dem Boden zugewendete untere Ende umzubördeln. Nachteilig dabei ist, dass die Stabilität des Bechers durch die nach außen ragende Stapelschulter und die durch Druckbelastung damit einhergehende Verformung der Manschette reduziert wird.

Aus der DE 31 20 075 A1 ist ein weiteres Verfahren sowie ein nach diesem Verfahren hergestellter Behälter bekannt geworden. Dabei wird vor dem Tiefziehen ein Papierbehälter bestehend aus Behälterwand und Behälterboden in die Tiefziehform eingelegt, wobei dessen Form mindestens angenähert der Außenform des herzustellenden Kombi - Verpackungsbehälters entspricht In diesen vorgefertigten Papierbehälter wird während dem Tiefziehen der aus Kunststoff bestehende und daraus zu formende Teil des Behälters hinein verformt, wobei sich dieser beim Tiefziehen fest an die innere Oberfläche des Papierbehälters anschmiegt und sich dabei mit diesem verbindet. Um ein gegenseitiges Verklemmen von gleichartig ineinander gestapelten Kombi - Verpackungsbehältern zu vermeiden, ist im Bereich des offenen Endes an der Behälterwand eine Stapelschulter ausgebildet. Diese ist stufenförmig sowie umlaufend nach außen vorspringend ausgebildet. Sind mehrere gleichartige Kombi - Verpackungsbehälter ineinander gestapelt, so stützt sich die nach außen vorspringende Stapelschulter an dem diesen Kombi - Verpackungsbehälter aufnehmenden Behälter an dessen oberen Öffnungsrand ab. Nachteilig dabei ist die Ausbildung der Stapelhilfen sowie dass der gesamte äußere Behälter, insbesondere der Behälterboden aus einem Papier- bzw. Kartonmaterial besteht. Bei Kontakt des Kartonmaterials mit Feuchtigkeit kann dies zu einer Beschädigung oder Zerstörung des Bechers führen.

Aus der CH 693 611 A5 ist ein weiterer konischer Kombi - Verpackungsbehälter bekannt geworden, der einen bis zu seinem Bodenrand verlaufenden Mantelteil aus einem Kartonmaterial aufweist. Der Bodenrand weist zur Bildung eines ringförmig umlaufenden Behälterfußes eine Umfalzung auf. Durch Tiefziehen wird ein Innenbehälter aus Kunststoff in den aus dem Kartonmaterial gebildeten Mantelteil hineinverformt, wobei der Innenbehälter einen Teil der Umfalzung des Mantelteils überdeckt, wobei durch eine Profilierung in diesem Abschnitt eine formschlüssige Verbindung zwischen den beiden Behälterteilen geschaffen wird. Im Bereich seines oberen offenen Endes ist am Behältermantel wiederum eine Stapelschulter ausgebildet, sodass mehrere gleich geformte Behälter locker ineinander stapelbar sind. Auch ist hier wiederum die Behälterwand gegenkonisch bezüglich des weiteren Wandabschnitts ausgebildet, wodurch die Abstützung der Stapelschulter an dem flanschartig abstehenden oberen Rand des weiteren Bechers ermöglicht wird. Durch die Ausbildung der Stapelschulter und den gegenkonischen Wandabschnitt wird wiederum die Stabilität des gesamten Kombi - Verpackungsbehälters herabgesetzt.

Aus der WO 98/13270 A1 ist ein anderes Verfahren zum Herstellen eines becherförmigen Kombi - Verpackungsbehälters, umfassend ein Kunststoffinnenteil und ein Außenteil sowie ein nach dem Verfahren hergestellter Kombi - Verpackungsbehälter bekannt geworden. Dabei werden der aus Kunststoff gefertigte becherförmige Innenteil und das den Kunststoffinnenteil außen umgebende mantelartige Außenteil getrennt voneinander hergestellt Zur Bildung des Kombi - Verpackungsbehälters wird das mantelartige Außenteil über das fertig ausgeformte, becherförmige Kunststoffinnenteil geschoben und anschließend am becherförmigen Kunststoffinnenteil fixiert. Dazu sind am Kunststoffinnenteil Einrastmittel vorgesehen, in welche das mantelartige Außenteil zur Fixierung am becherförmigen Kunststoffinnenteil lösbar einrastet. Dabei ist ein erstes Einrastmittel im Bodenbereich des becherförmigen Kunststoffinnenteils durch eine dort angeordnete umlaufende Schulter gebildet, deren Außendurchmesser größer ist als der Innendurchmesser der unteren Kante des mantelartigen Außenteils. Beim Darüberschieben wird das mantelartige Außenteil mit seiner Unterkante soweit über die umlaufende Schulter geschoben, dass es hinter der Schulter einrastet. Ein weiteres Einrastmittel ist durch den oberen nach außen vorstehenden Rand des becherförmigen Kunststoffinnenteils gebildet. Dabei wird das mantelartige Außenteil beim Drüberschieben mit seiner Oberkante so weit in Richtung des umlaufenden Randes geschoben, bis es daran anstößt und nach dem Einrasten zwischen dem Rand und der umlaufenden Schulter gehalten wird. Durch das getrennte Herstellen der beiden Bauteile vor dem Ineinanderfügen, ist es einfach möglich, Stapelhilfen bzw. Stapelmittel im Bereich des Bodens des Bechers anzuordnen, um so wiederum mehrere gleichartige Kombi - Verpackungsbehälter ineinander stapeln zu können, ohne dass diese gegeneinander verklemmen.

Die DE 195 09 100 A1 beschreibt einen zweiteiligen Verpackungsbehälter umfassend einen Kunststoffbecher und eine diesen umgebende Kartonhülse, wobei diese nach deren getrennten Fertigung zusammengefügt werden. Die Kartonhülse ist aus einem Kartonzuschnitt mit einer Überlappungsnaht geformt und verjüngt sich nach unten hin. Weiters liegt die Kartonhülse eng an dem Kunststoffbecher an, sodass die Kartonhülse die Becherwände des Kunststoffbechers formstabilisiert. Ein unterer Rand der Kartonhülse schließt mit dem Boden des Kunststoffbechers ab oder ragt von einer Außenfläche des Bodens beabstandet, über diesen in Richtung der Längsachse des Verpackungsbehälters hinaus. Der untere Rand der Kartonhülse ist durch nach innen umgeknickte Falze verstärkt. Zur Aufnahme der umgeknickten Falze ist im Behältermantel des Kunststoffbechers in einem unmittelbaren Übergangsbereich, ausgehend vom Boden, ein bezüglich des Behältermantels nach innen versetzter Wandabschnitt zur Ausbildung eines Aufnahmeraums eingeformt. Weiters können am Fußende - also im Bereich des Bodens des Kunststoffbechers - eingeformte Nocken zur Erzielung eines Stapelabstandes zwischen ineinander gestapelten Kunststoffbechern angeordnet sein. Dadurch können die von der Kartonhülse getrennten Kunststoffbecher lösbar aufeinander gestapelt werden, ohne zusammen zu hängen oder zusammen zu kleben.

Aus der DE 20 2004 015 374 U1 ist ein Behälter für Lebensmittel, wie Molkereiprodukte und dergleichen bekannt geworden, der einen Becher sowie eine Manschette aufweist. Der Becher seinerseits weist eine Bodenfläche und einen Mantelabschnitt auf. Die Manschette umgibt zumindest einen Teil des Mantelabschnitts des Bechers. In seinem offenen Endbereich weist der Becher eine abgesetzte Stufe auf, welche als Anschlag für die Manschette dient. Unterhalb dieser Stufe sind im Bereich seines Mantelabschnitts auf der Außenseite mehrere Profilierungen ausgebildet, die als Haltenocken für die Manschette dienen. Der Mantelabschnitt des Bechers ist konisch verjüngend vom offenen Ende hin zum Boden ausgebildet, wobei hingegen die Manschette eine zylindrische Form aufweist und so der Manschettenzuschnitt im abgewickelten Zustand eine im Wesentlichen rechteckige Form besitzt. Zum Ausgleich zwischen der zylinderförmigen Manschette und dem konisch verjüngenden Mantelabschnitt ist die Manschette im Bereich des Bodens umgebördelt und bildet einen größeren Wulst aus.

Die DE 295 01 247 U1 beschreibt eine Kombinationsverpackung aus mehreren Werkstoffen, die vorzugsweise aus Kunststoff und Papier gewählt sind. Die Kombinationsverpackung umfasst eine stapelfähige, einsteckbare Dose, welche sich in einem gewickelten Zylinder, vorzugsweise aus Papier, befindet. Dieser Zylinder ist im Bereich des Bodens mit einer Bördelung versehen und stützt sich am Mantel der innen liegenden Dose ab. In seinem offenen Endbereich weist die einsteckbare Dose einen besonders ausgeformten oberen Rand auf, der zur Versiegelung mit einer Siegelscheibe dient. Weiters ist die Kombinationsverpackung mit einem vorzugsweise wieder verschließbaren Deckel aus Kunststoff versehen. Die Bördelung stützt sich an der glatten Außenwand des nach innen versetzten Mantelabschnitts der einsteckbaren Dose ab.

Aus der EP 0 408 515 A1 ist ein Verpackungsbehälter für die getrennte Abfallverwertung des Kunststoff- und Kartonanteils eines gebrauchten Verpackungsbehälters bekannt geworden. Dabei hat die die Umfangswand verstärkende und nur formschlüssig mit dem Kunststoffbecher verbundene Kartonmanschette einen Soll-Trennstreifen, wobei nach dessen Betätigung sich dieser vom Kunststoffbecher ablösen lässt. Der Soll-Trennstreifen ist am Überlappungsbereich der Kartonmanschette gebildet. Dieser weist nur eine ihn auf einer Seite begrenzende, durch die Überlappung verdeckte Schwächungslinie auf. Beim Aufreißen wirkt die innere Überdeckungskante als Schneidkante für die äußere Überlappungsschicht.

Die WO 2010/112208 A1 beschreibt einen Kombi-Verpacküngsbehälter umfassend einen becherförmigen Innenbehälter mit einem Behältermantel, einem Boden und mit einem im Bereich seines offenen Endes den Behältermantel nach außen überragenden Flansch sowie ein den Innenbehälter an seinem Behältermantel umgebendes manschettenformiges Außenteil mit in Richtung einer Längsachse voneinander distanzierten Endbereichen. Der Innenbehälter ist an einer Innenseite des manschettenförmigen Außenteils anliegend angeformt. Das manschettenförmige Außenteil ist zwischen seinen in Richtung der Längsachse voneinander distanzierten Endbereichen einlagig ausgebildet. In einem Abschnitt der Behälterwand des Bodenbereichs ist zumindest eine in Richtung auf die Längsachse vorragende Einschnürung ausgebildet, wobei die Einschnürung sowohl am Außenteil als auch am Behältermantel ausgebildet ist. Dabei bildet die Einschnürung eines der Stützmittel aus. Zwischen der Einschnürung und den beiden Endbereichen ist jeweils ein erster sowie weiterer Wandabschnitt ausgebildet.

Der vorliegenden Erfindung liegt die Aufgabe zugrunde, einen Kombi-Verpackungsbehälter zu schaffen, welcher im Inline-Verfahren hergestellt wird und trotz geringer Wandstärke des Innenbehälters in seinem Bodenbereich ausreichende Festigkeitseigenschaften aufweist. Darüber hinaus soll auch noch ein störungsfreier Transport derartiger Behälter bei Abfüllanlagen erzielt werden.

Diese Aufgabe der Erfindung wird durch die Merkmale des Anspruches 1 gelöst. Der sich durch die Merkmale des Anspruches 1 ergebende Vorteil liegt darin, dass dadurch auf einfache Art und Weise Stapelmittel gebildet werden können, ohne dass dabei zusätzliche Umformvorgänge im Bereich des Außenteils vor der endgültigen Formgebung notwendig sind. Durch diese Einschnürung wird der Querschnitt in einer senkrecht zur Längsachse ausgerichteten Ebene soweit eingeengt, dass eine optimale Auflage der Stirnseite des Außenteils an diesem Vorsprung erfolgen kann, jedoch die Stabilität des gesamten Bechers weiter erhalten bleibt. Weiters kann so eine nahezu unverformte Werbefläche zur Verfügung gestellt werden. Darüber hinaus werden auch stärkere Knicke vermieden, welche sonst zu einer Stabilitätsminderung führen würden. Damit ist so mit geringstem Aufwand, insbesondere bei der Fertigung, eine ausreichende Stapelbarkeit erzielbar und es kann trotzdem eine ungehinderte Entnahme des Füllgutes erfolgen. Darüber hinaus kann so ein eindeutiger, scharfkantiger Abstützbereich geschaffen werden, um dadurch ein gegenseitiges Verklemmen von ineinander gestapelten Kombi-Verpackungsbehältern zu vermeiden. Durch das Vorsehen eines eigenen

Übergangsabschnitts zwischen dem Boden und dem Behältermantel mit der umfänglich in radialer Richtung nach innen vorspringenden Stufe ist eine zusätzliche Verstärkung, insbesondere des Bodens, erzielbar. Zusätzlich wird noch durch die axiale Distanzierung und der damit verbundenen Freistellung des dem Boden zugewendeten Endbereichs des manschettenförmigen Außenteils ein Verklemmen bzw. Hineintreten desselben zwischen Transportglieder einer Fördervorrichtung verhindert. Weiters kann damit die Möglichkeit geschaffen werden, die zumeist offene Schnittkante des aus einem Kartonmaterial gebildeten Außenteils vor einer direkten Feuchtigkeitsaufnahme bei Bodenkontakt zu schützen. Ein zusätzlicher, optischer Effekt lässt sich dabei dadurch noch erzielen, dass so eine nahezu durchgängige bis hin zum Boden bedruckte Präsentationsfläche zur Verfügung steht, ohne dass dabei ein umlaufender Bodenrand des Innenbehälters mit dessen Farbgebung sichtbar ist. Dieser nach innen hineinverformte stufenförmige Rücksprung des Übergangsabschnitts bildet somit eine Schattenfuge am becherförmigen Verpackungsbehälter aus.

Vorteilhaft ist auch eine weitere Ausführungsform nach Anspruch 2, da dadurch einerseits eine Art Federboden geschaffen werden kann, welcher es ermöglicht, dass die gesamte Bodenpartie in axialer Richtung in den Aufnahmeraum des Bechers hineinverformt werden kann und andererseits ein scharfkantiger Übergang vermieden wird. Die Stufenfläche bildet gemeinsam mit der Stirnseite des Außenteils eine Anschlagbegrenzung für die Verformung des Bodens aus. Durch den radial nach innen ragenden stufenförmigen Ansatz bzw. Vorsprung wird im Zusammenwirken mit dem ausgerundeten Verbindungswandteil eine elastische Verformung in diesem Übergangsbereich geschaffen, ohne dass es dabei zu einem Bruch des Innenbehälters und einer damit verbundenen Undichtheit kommt.

Vorteilhaft ist weiters eine Ausbildung nach Anspruch 3, da so die Rückfedereigenschaften des gesamten Behälterbodens zusätzlich noch verbessert werden können.

Durch die Ausbildung nach Anspruch 4 ist es möglich, bei ausreichenden Festigkeitseigenschaften trotzdem das Eigengewicht des Verpackungsbehälters relativ gering halten zu können. Weiters können damit zusätzliche Bearbeitungsschritte für die Bildung des Außenteils vermieden werden.

Nach einer anderen Ausführungsvariante gemäß Anspruch 5 wird es möglich, mit sehr dünnen Wandstärken zur Bildung des Innenbehälters das Auslangen zu finden. Weiters kann damit aber auch auf zusätzliche gegenseitige Haltemittel zwischen dem Außenteil und dem Innenbehälter verzichtet werden.

Vorteilhaft ist auch eine Ausbildung nach Anspruch 6, da so das Außenteil in seinem unverformten Zustand mit einer hohen Druckqualität bedruckt werden kann. Weiters wird damit aber auch durch den Solltrennbereich die Möglichkeit geschaffen, eine sortenreine Entsorgung derartiger Kombi-Verpackungsbehälter für den Benutzer zu ermöglichen.

Gemäß einer Ausbildung, wie im Anspruch 7 beschrieben, wird ein vordefinierter Trennbereich geschaffen, bei dem ein ungewolltes Einreißen des Außenteils außerhalb des Solltrennbereichs vermieden werden kann.

Dabei erweist sich eine Ausgestaltung nach Anspruch 8 vorteilhaft, weil dadurch gerade für einen im Inline-Verfahren hergestellten Behälter eine zusätzliche Schwächung des Behältermantels in seinem Übergangsbereich hin zum Siegelflansch vermieden werden kann. Weiters wird so aber auch dem Benutzer die Möglichkeit gegeben, die Aufrisslasche leichter erfassen zu können, als dies bei einer Anordnung im Nahbereich des Flansches bislang der Fall war.

Schließlich ist aber auch eine Ausbildung, wie im Anspruch 9 beschrieben möglich, das Ergreifen bzw. Anfassen der Aufrisslasche noch zusätzliche erleichtert, da die Vertiefung eine Freistellung der Aufrisslasche bildet und damit in diesem Bereich eine direkte Anformung des Behältermantels an die Innenseite des Außenteils nicht erfolgt ist. Durch die radiale Distanzierung der Vertiefung von der Innenseite des manschettenförmigen Außenteils wird so auch der Gesamteindruck und damit die bedruckbare Außenseite des Außenteils nicht beeinflusst und trotzdem die Bedienbarkeit für den Trennvorgang erleichtert.

Zum besseren Verständnis der Erfindung wird diese anhand der nachfolgenden Figuren näher erläutert.

Es zeigen jeweils in stark schematisch vereinfachter Darstellung:
- Fig. 1: einen Teilbereich einer Tiefziehform zur Bildung des KombiVerpackungsbehälters, in Ansicht geschnitten;
- Fig. 2: einen vergrößerten Teilabschnitt der Tiefziehform nach Fig. 1, im Bereich der Einschnürung des Kombi-Verpackungsbehälters;
- Fig. 3: eine mögliche Ausfuhrungsform des Kombi-Verpackungsbehälters, in Ansicht und teilweise geschnitten;
- Fig. 4: den Bodenbereich des Kombi-Verpackungsbehälters nach Fig. 3, in vergrößerter Darstellung;
- Fig. 5: zwei baugleich ineinander gestapelte Kombi-Verpackungsbehälter nach den Fig. 3 und 4, in Ansicht und teilweise geschnitten;
- Fig. 6: ein aus einem Zuschnitt gebildetes manschettenförmiges Außenteil zur Bildung des Kombi-Verpackungsbehälters, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

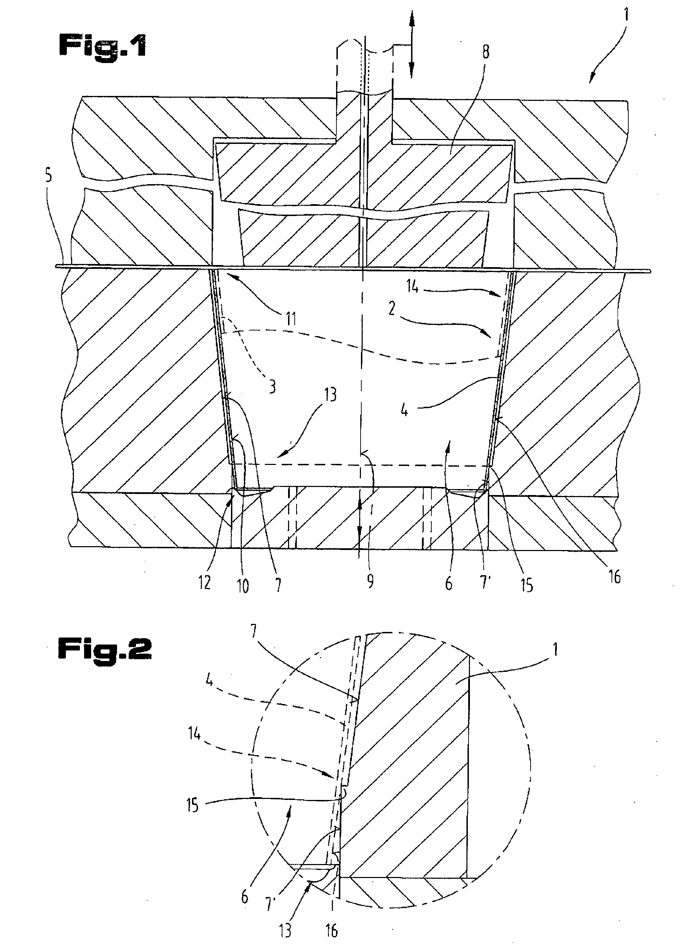

In den Fig. 1 und 2 ist stark schematisch vereinfacht eine Tiefziehform 1 gezeigt, welche zur Herstellung eines Kombi - Verpackungsbehälters 2 bzw. 2' dient, wobei dieser einen durch Tiefziehen hergestellten, becherförmigen Innenbehälter 3 sowie zumindest ein manschettenförmiges Außenteil 4 umfasst. Das Bezugszeichen 2' wird später für gleichartig ausgebildete und ineinander gestapelte Kombi - Verpackungsbehälter verwendet.

Das manschettenförmige Außenteil 4 wird bevorzugt aus einem Kartonmaterial mit einer ausreichenden Festigkeit in Bezug auf die Aufnahme und Übertragung von Druckkräften gebildet und aus einem ebenflächigen Zuschnitt zu einem Mantel gewickelt, wie dies bereits hinlänglich bekannt ist. Dies wird nachfolgend noch näher beschrieben werden. Der Zuschnitt wird in seiner unverformten ebenen Lage bedruckt. Als Werkstoff wird zumeist ein Zellulosematerial verwendet, wobei dies auch ein im Recyclingverfahren hergestellter Karton oder Starkpapier sein kann.

Der becherförmige Innenbehälter 3 wird aus einer Schicht 5 durch Tiefziehen gebildet, wie dies im Bereich eines Formhohlraums 6 der Tiefziehform 1 in strichlierten Linien angedeutet ist. Der Formhohlraum 6 wird dabei durch zumindest eine Formwand 7 begrenzt. So wird bei diesem Verfahren zur Herstellung des Kombi - Verpackungsbehälters 2 vor dem Tiefziehen des becherförmigen Innenbehälters 3 das manschettenförmige Außenteil 4 in die Tiefziehform 1 eingelegt und im so genannten "Inline - Verfahren" die den Innenbehälter 3 bildende Schicht 5 mit einem Formstempel 8 in Richtung einer Längsachse 9 verformt und durch ein zusätzlich in den Formhohlraum 6 eingebrachtes Druckmittel, wie beispielsweise Druckluft, an einer Innenseite 10 des manschettenförmigen Außenteils 4 bevorzugt vollflächig eng daran anliegend angelegt. Die Innenseite 10 stellt auch gleichzeitig eine Innenfläche des Außenteils 4 dar. Dabei wird das Außenteil 4 im Axialschnitt gesehen als zwischen seinen in Richtung der Längsachse 9 voneinander distanzierten Endbereichen 11, 12 durchlaufend geradlinig verlaufender Bauteil in die Tiefziehform 1, insbesondere dessen Formhohlraum 6, eingelegt. Damit sind außer dem Verbindungsvorgang ausgehend vom Zuschnitt hin zum geschlossenen Mantel keine weiteren zusätzlichen Arbeitsschritte, wie ein Umbördeln oder eine Formgebung für Stapelmittel oder dergleichen durchzuführen.

Wie nun besser aus dem Detail der Fig. 2 zu ersehen ist, weist der Formhohlraum 6 in einem auszubildenden Bodenbereich 13 des Kombi-Verpackungsbehälters 2 im Bereich einer auszubildenden umlaufenden Behälterwand 14 einen in axialer Richtung bevorzugt stufenförmig ausgebildeten Absatz 15 aus, welcher in den Formhohlraum 6 sowie in Richtung auf die Längsachse 9 vorspringend vorragt. Es kann dabei auch von einem Ansatz gesprochen werden. So wird der Absatz 15 in radialer Richtung bezüglich der Längsachse 9 außen und innen durch ein Absatzende begrenzt. Ist der Kombi-Verpackungsbehältern 2 rund ausgebildet, so weist die den Absatz 15 bildende Absatzfläche eine kreisringförmige Querschnittsform auf. Die erste Formwand 7 erstreckt sich ausgehend von dem den Absatz 15 außen abschließenden Absatzende bzw. der Begrenzung, also jenem Abschnitt, der von der Längsachse 9 am weitesten entfernt ist, im Axialschnitt gesehen bevorzugt konisch erweiternd bezüglich der Längsachse 9 hin auf die vom Bodenbereich 13 abgewendete Seite. Von jenem der Längsachse 9 näher liegenden Absatzende bzw. Endabschnitt des Absatzes 15 ist je nach herzustellendem Kombi-Verpackungsbehälter 2 die weitere Formwand 7' mit einer zur ersten Formwand 7 im Axialschnitt gesehen dazu unterschiedlichen Neigung ausgerichtet. Somit erstrecken sich ausgehend von den beiden Absatzenden jeweils die Formwände 7, 7' in voneinander abgewendeter bzw. entgegengesetzter Richtung. Die Formwand 7' kann parallel bezüglich der Längsachse 9 oder aber auch gegenkonisch zur ersten Formwand 7 ausgerichtet verlaufen.

An diesem Absatz 15, welcher bevorzugt umlaufend bezüglich der Längsachse 9 ausgebildet ist, stützt sich zumeist in der unverformten Ausgangslage das Außenteil 4 mit seiner Außenseite 16 ab.

In dieser vorpositionierten und noch unverformten Lage des Außenteils 4 erfolgt der in bekannter Weise durchzuführende Tiefziehvorgang. Dazu wird die Schicht 5, aus welcher der Innenbehälter 3 gebildet werden soll, mittels des Formstempels 8 in Richtung der Längsachse 9 hin zum Bodenbereich 13 vorgestreckt bzw. vorverformt und anschließend durch Einbringen beispielsweise von Druckluft mit einem bezüglich des Umgebungsdruckes höher liegenden Druck in einer unteren Grenze von 4 bar, insbesondere 6 bar, und einer oberen Grenze von 15 bar, insbesondere 8 bis 10 bar zum fertigen Kombi-Verpackungsbehälter 2 endverformt. Durch diesen Vorgang erfolgt die Einprägung des Absatzes 15 im Bereich des am Beginn noch geradlinig verlaufenen Außenteils 4 zur Bildung der Behälterwand 14.

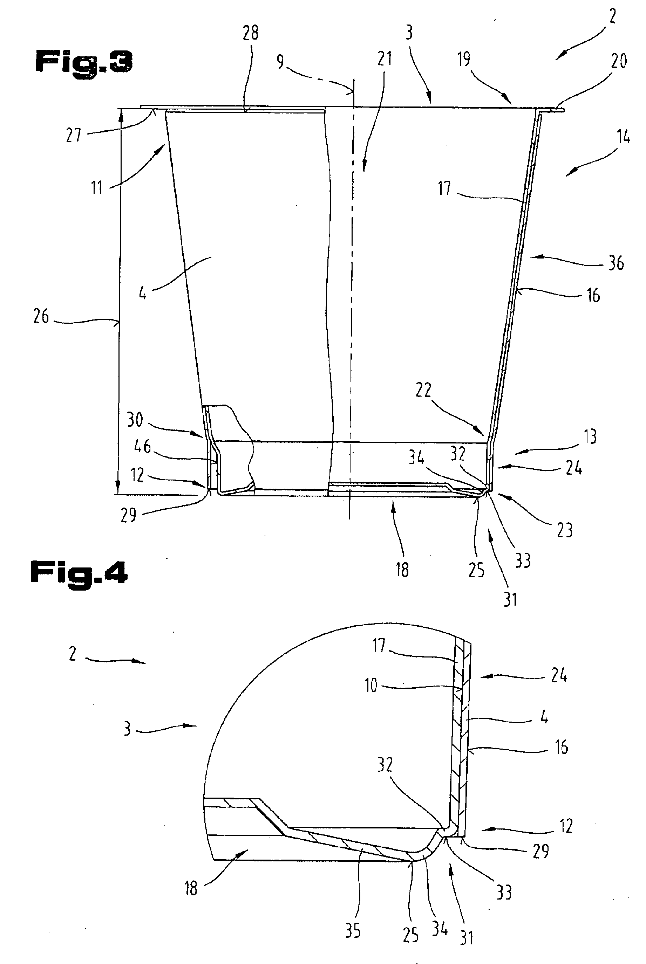

Wie nun besser aus den Fig. 3 bis 5 zu ersehen ist, umfasst der becherförmige Innenbehälter 3 einen Behältermantel 17, einen Boden 18 sowie ein auf der davon abgewendeten Seite offenes Ende 19. Im Bereich des offenen Endes 19 kann gegebenenfalls ein den Behältermantel 17 nach außen überragender Flansch 20 angeordnet sein, welcher zum dichtenden Abschluss mit einer hier nicht näher dargestellten Verschlussvorrichtung, insbesondere einer Siegelfolie oder dergleichen ausgebildet sein kann. So kann der Flansch 20 auch als so genannter Siegelflansch oder Siegelrand bezeichnet werden. Der Boden 18 sowie der Behältermantel 17 umgrenzen somit einen Aufnahmeraum 21, welcher zur Aufnahme und somit zur Bevorratung von unterschiedlichsten Lebensmitteln für den Verzehr gedacht ist. Dies können die unterschiedlichsten Getränke, Molkereiprodukte usw. sein.

Der Innenbehälter 3 kann aus den beliebigsten Kunststoffmaterialien bzw. aber auch aus anderen tiefziehbaren biologisch abbaubaren Werkstoffen gebildet sein. Als Kunststoffe können Folien aus dem Werkstoff Polypropylen (PP) oder Polystyrol (PS) eingesetzt werden, wobei Polypropylen den Nachteil eines größeren Schrumpfverhaltens gegenüber Polystyrol aufweist. Der hier gezeigte becherförmig ausgebildete Innenbehälter 3, insbesondere dessen Behältermantel 17, ist bezüglich der Längsachse 9 jeweils konisch verjüngend ausgehend vom offenen Ende 19 hin zum Boden 18 ausgebildet.

Bei bisher bekannten Kombi - Verpackungsbehältern, welche im so genannten "Inline - Verfahren" hergestellt worden sind, wurden Stapelhilfen im Bereich des offenen Endes 19 angeordnet bzw. ausgebildet, wie dies bereits aus der DE 31 20 075 A1 sowie der EP 0 102 522 A1 bzw. aber auch der CH 693 611 A5 zu entnehmen ist. Bei all diesen Kombi - Verpackungsbehältern musste das manschettenförmige Außenteil zusätzlich zu dessen Zuschnitt mit einer entsprechenden Prägung bzw. Vorverformung versehen werden, um die entsprechenden Stapelmittel während des Tiefziehvorganges des becherförmigen Innenbehälters später ausbilden zu können. Eine Stapelkante bildete dabei die Kante zwischen dem Siegelflansch und dem Behältermantel und die weitere Stapelkante wurde durch einen gegenkonisch verformten Behältermantelabschnitt an der Außenseite des Kombi - Verpackungsbehälters im Bereich seines offenen Endes gebildet.

Durch diese Vorprägung war ein ebenflächiges Aufeinanderstapeln von Zuschnitten zur Bildung des Außenteils nur schwer erzielbar bzw. war ein zusätzlicher Arbeitsschritt zu dessen Formgebung im Außenteil notwendig. Dadurch, dass das mantelförmige Außenteil bereits vor dem Tiefziehvorgang in die Tiefziehform eingelegt werden musste, konnte eine entsprechende Formgebung des herzustellenden Innenbehälters nur durch entsprechende Formgebung im Bereich des mantelförmigen Außenteils erfolgen, da der Innenbehälter eng anliegend an dessen Innenseite während des Herstellvorganges angeformt worden ist.

Bei dem hier gezeigten Ausführungsbeispiel werden zusammenwirkende Stützmittel 22, zum Ineinanderstapeln von mehreren gleichartigen Kombi - Verpackungsbehältern 2, 2' im Bodenbereich 13 angeordnet bzw. dort ausgebildet. Dabei ist der Übergangs- bzw. Eckbereich zwischen dem Boden 18 und der Behälterwand 14 sowie ein unmittelbar daran anschließender Wandabschnitt 24 als Bodenbereich zu verstehen.

Der Boden 18 bzw. ein Teilabschnitt desselben bildet an seiner am weitesten vom offenen Ende 19 abgewendeten Seite in einer aufrecht stehenden Position eine Aufstandsfläche 25 aus.

Das manschettenförmige Außenteil 4 weist in Richtung der Längsachse 9 zwischen seinen Endbereichen 11, 12 eine Höhe auf, welche kleiner ist als eine Distanz 26 zwischen einer Unterseite 27 des Flansches 20 und der Aufstandsfläche 25 des Bodens 18. Weiters kann sich eine Stirnseite 28 des hier oben angeordneten Endbereiches 11 an der Unterseite 27 des Flansches 20 abstützen bzw. liegt diese an der Unterseite 27 an. Es wäre aber auch noch möglich, die Stirnseite 28 unmittelbar benachbart zur Unterseite 27 anzuordnen, wobei dies von der Konizität sowie der relativen Lage des Außenteils 4 im Formhohlraum 6 abhängig ist. Eine im weiteren Endbereich 12 ausgebildete Stirnseite 29 des Außenteils 4 ist in axialer Richtung von der Aufstandsfläche 25 geringfügig in Richtung auf das offene Ende 19 distanziert dazu angeordnet.

Bei diesem hier gezeigten Ausführungsbeispiel ist das manschettenförmige Außenteil 4 mit Ausnahme seines Verbindungsbereiches im Überlappungsbereich zwischen seinen in Richtung der Längsachse 9 voneinander distanzierten Endbereichen 11, 12 einlagig ausgebildet. Weiters bildet die dem Flansch 20 gegenüberliegende Stirnseite 29 des Außenteils 4 das weitere Stützmittel 23 für den Kombi-Verpackungsbehälter 2, 2' aus. Die zuvor beschriebene einlagige Ausbildung des Außenteils 4 wird dahingehend verstanden, dass über die gesamte Längs- bzw. Höhenerstreckung des Außenteils 4 in Richtung der Längsachse 9 keinerlei Umfalzungen oder dergleichen sowie gegebenenfalls zusätzliche Einlageteile vorgesehen sind. Die Doppellagigkeit im Verbindungsbereich der beiden einander zugewendeten Stirnenden des zu verbindenden Zuschnitts ist aufgrund der gewählten Verbindung nicht auszuschließen.

Durch diese Ausbildung kann eine nahezu direkte Lastabtragung in Richtung der Längsachse 9, ausgehend vom Flansch 20 über dessen Unterseite 27 auf die umlaufende Stirnseite 28 des Außenteils 4 und weiter über dieses bis hin zum Übergangsbereich in den Boden 19 erfolgen. Damit kommt dem Innenbehälter 3 im Abschnitt seines Behältermantels 17 nur mehr die Funktion einer dichtenden Hülle zur Aufnahme bzw. Bevorratung der dafür vorgesehenen Speisen bzw. Getränke zu. So übernimmt im Bereich der Behälterwand 14 ausschließlich das Außenteil 4 die tragende Stützfunktion.

Die zuvor beschriebenen Stützmittel 22, 23 werden einerseits durch die dem Boden 18 zugewendete Stirnseite 29 des Außenteils 4 und andererseits durch eine in die Behälterwand 14 eingeformte Einschnürung 30 gebildet. Diese Einschnürung 30 wird - wie dies auch aus den Fig. 2 und 3 zu ersehen ist - durch den im Bodenbereich 13 angeordneten Absatz 15 während des Formgebungsvorganges der gesamten Behälterwand 14 gebildet. Durch das in den Formhohlraum 6 eingebrachte Druckmedium erfolgt zuerst eine Umformung des Außenteils 4 um den stufenförmigen Absatz 15 herum, bis eine vollständige Anlage sowohl des Außenteils 4 als auch des Innenbehälters 3, insbesondere dessen Behältermantel 17 an der Formwand 7 erfolgt.

Somit ist die Einschnürung 30 sowohl am Außenteil 4 als auch am Behältermantel 17 und somit der gesamten Behälterwand 14 ausgebildet. Bevorzugt wird die Einschnürung 30 umlaufend über den Umfang des Kombi-Verpackungsbehälters 2, 2' ausgebildet. Es wäre aber unabhängig davon möglich, die Einschnürung 30 nur bereichsweise über den Umfang verteilt an vorbestimmten Stellen anzuordnen bzw. auszubilden. Eine entsprechende Abstützung des durch die Stirnseite 29 gebildeten Stützmittels 23 kann auch bei nicht voll umfänglich durchlaufender Einschnürung 30 in ausreichender Weise erfolgen. Eine bessere Abstützung wird jedoch bei einer voll umfänglich und durchlaufenden Einschnürung 30 erzielt.

Weiters ist es vorteilhaft, wenn die in Richtung auf die Längsachse 9 vorragende Einschnürung 30 stufenförmig ausgebildet ist bzw. einen stufenförmigen Absatz im Bereich der Behälterwand 14 ausbildet. Dieser Absatz bildet dann einen Stützbereich bzw. eine Stützfläche aus, welcher das weitere Stützmittel 22 darstellt. Diese Einschnürung 30 kann aber auch als so genannter Knick bezeichnet werden, mit welchem die Behälterwand 14 in Richtung auf die Längsachse 9 hin versetzt ausgebildet ist. Dabei können auch noch verbindende Übergangsradien zwischen der Einschnürung 30 und den daran angrenzenden Wandabschnitten 24 bzw. 36 angeordnet sein.

So weist die Einschnürung 30 des Behältermantels 17 eine Höhe in radialer Richtung bezüglich der Längsachse 9 auf, welche größer ist als eine unverformte Ausgangsstärke des Außenteils 4. Dadurch wird sichergestellt, dass das Stützmittel 22 ausreichend weit in Richtung auf die Längsachse 9 hin vorragt und so in weiterer Folge die Stirnseite 29 des Außenteils 4 sich ohne Verklemmen der ineinander gestapelten Verpackungsbehälter 2, 2' daran abstützen kann.

Durch den zuvor beschriebenen Anpressvorgang der Behälterwand 14, insbesondere des Wandabschnitts 24 des Außenteils 4, an der Formwand 7 bzw. 7' des Formhohlraums 6 wird so dieser Wandabschnitt 24 zwischen der Einschnürung 30 und dem dem Boden 18 zugewendeten Endbereich 12 in seiner Stärke in radialer Richtung bezogen auf die Längsachse 9 um ein Ausmaß in einer unteren Grenze von 2 % und einer oberen Grenze von 20 % bezüglich seiner unverformten Ausgangsstärke reduziert. Durch dieses Verpressen des Außenteils 4 wird in diesem Abschnitt eine dichtere Struktur erzielt, wodurch auch bei der offenen Schnittkante im Bereich der Stirnseite 29 das Feuchtigkeits- bzw. Wasseraufnahmevermögen stark reduziert wird. Um dieses Aufnahmevermögen im Bereich der offenen Stirnseite 29 noch zusätzlich zu verringern, kann es sich als vorteilhaft erweisen, wenn zumindest die Stirnseite 29 sowie gegebenenfalls der Wandabschnitt 24 an seiner Innenseite 10 und/oder seiner Außenseite 16 zusätzlich noch mit einer nicht näher dargestellten Beschichtung versehen ist. Diese Beschichtung soll das Eindringen bzw. die Aufnahme von Feuchtigkeit in die offene Schnittkante sowie gegebenenfalls in die umliegenden Bereiche verhindern und kann aus der Gruppe von Lacken, Wachsen, Imprägnierungen usw. ausgewählt sein.

Der weitere Wandabschnitt 36 der Behälterwand 14 erstreckt sich ausgehend von der Einschnürung 30 hin in Richtung auf das offene Ende 19 des Kombi-Verpackungsbehälters 2, 2'. Die beiden Wandabschnitte 24, 36 sind im Axialschnitt gesehen in etwa geradlinig verlaufend ausgebildet.

Wie nun besser aus der Fig. 4 zu ersehen ist, ist zwischen dem Behältermantel 17 und dem Boden 18 ein eigener Übergangsabschnitt 31 vorgesehen, welcher ausgehend vom Behältermantel 17 eine in radialer Richtung auf die Längsachse 9 rückspringende Stufe 32 umfasst. Die Stufe 32 weist ihrerseits eine dem Boden 18 zugewendete Stufenfläche 33 auf, wobei diese in axialer Richtung von der durch den Boden 18 gebildeten Aufstandsfläche 25 in Richtung auf das offene Ende 19 distanziert angeordnet ist. Der rückspringende Wandteil des Behältermantels 17 ist als flanschförmiger, insbesondere umfänglich durchgehender Rücksprung bezogen auf die Außenseite des Innenbehälters 3 ausgebildet. Dieser stufenförmige Absatz ist somit Bestandteil des Innenbehälters 3 und ist im Zuge des gemeinsamen Herstellvorganges des Kombi-Verpackungsbehälters 2, 2' ausgebildet worden. Damit können im Bodenbereich Hinterschneidungen vermieden werden, welche die gemeinsame Entformung des Kombi-Verpackungsbehälters 2, 2' erschweren würden. Die Entformung kann bei empfindlichen Werkstoffen zu einer Beschädigung des Innenbehälters 3 und in weiterer Folge zu Undichtheiten führen.

Die Distanzierung der Stufenfläche 33 mit dem nicht näher bezeichneten Abstand kann dabei nur als minimale Stufe bis hin zu einem kleineren Absatz ausgebildet sein. So kann der Abstand in axialer Richtung in etwa 0,1 mm bis zu 4 mm betragen. Ein bevorzugter Bereich liegt zwischen 0,5 mm und 2 mm. Der weitere Endbereich 12 des manschettenförmigen Außenteils 4 endet mit seiner Stirnseite 29 in etwa bündig im Bereich der Stufenfläche 33. Damit wird eine geringfügige Distanzierung der dem Boden 18 bzw. der Aufstandsfläche 25 zugewendeten Stirnseite 29 des manschettenförmigen Außenteils 4 erzielt. Durch die Ausbildung der Stufenfläche 33 an der Stufe 32 kann so ein Teilabschnitt des Tiefziehwerkzeuges 1 zusätzlich auch noch als axialer Anschlag für die Positionierung des vor dem Tiefziehvorganges eingelegten manschettenförmigen Außenteils 4 dienen.

Der Übergangsabschnitt 31 umfasst bei diesem hier gezeigten Ausführungsbeispiel weiters noch anschließend an die rückspringende Stufe 32 hin zum Boden 18 einen im Axialschnitt gesehen gerundet ausgebildeten Verbindungswandteil 34.

Der Boden 18 kann anschließend an den Verbindungswandteil 34 einen im Axialschnitt gesehen in Richtung auf das offene Ende 19 geneigt verlaufenden Bodenabschnitt 35 umfassen. Dabei bildet sich die zuvor beschriebene Aufstandsfläche 25 im vorliegenden Ausführungsbeispiel zwischen dem Verbindungswandteil 34 und dem Bodenabschnitt 35 aus. Der Verbindungswandteil 34 ist mit einer Ausrundung versehen, die bezüglich der Außenseite des Kombi-Verpackungsbehälters 2, 2' eine konvexe Raumform ausbildet.

Bei einer Druckbelastung des Kombi-Verpackungsbehälters 2, ausgehend von seinem Flansch 20, in axialer Richtung bezüglich der Längsachse 9 hin auf die Aufstandsfläche 25 des Bodens 18 wird diese Axialkraft zumeist in den Flansch 20 eingeleitet und von diesem weitere an das manschettenförmige Außenteil 4 übertragen. Da im vorliegenden Ausführungsbeispiel die im weiteren Endbereich 12 angeordnete Stirnseite 29 des Außenteils 4 geringfügig distanziert von der Aufstandsfläche 25 angeordnet ist, ist ein gewisser Federweg des Übergangsabschnittes 31 zu überwinden, bis dass die hier untere Stirnseite 29 des Außenteils 4 an einer Unterlage bzw. Abstützfläche des Kombi-Verpackungsbehälters 2 anliegt.

Diese Distanzierung der Stirnseite 29 des Außenteils 4 dient dazu, dass beim Transport der Kombi-Verpackungsbehälter, wie dies beispielsweise bei Abfüllanlagen der Fall ist, sich die Stirnseite 29 nicht zwischen Fördergliedern von Zufördervorrichtungen verklemmen kann. Dies tritt gerade dann auf, wenn sich die Stirnseite 29 bis hin in den Bodenbereich erstreckt oder sogar über die Aufstandsfläche 25 des Boden 18 auf die vom offenen Ende 19 abgewendete Seite vorragt. Durch dieses Verklemmen des Außenteils 4 in seinem hier unteren Endbereich 12 kann auch zu einem ungewollten Umfallen des noch unbefüllten Kombi-Verpackungsbehälters 2, 2' führen. Dies führt in weiterer Folge zu Störungen an der Abfüllanlage.

Die radial nach innen vorspringende und bevorzugt umfänglich durchlaufende Stufe 32 dient weiters auch noch dazu, eine zusätzliche Versteifung des Innenbehälters 3 in seinem Bodenbereich zu erzielen. Die Stufe 32 in Verbindung mit dem Verbindungswandteil 34 bildet an der Außenseite des Kombi-Verpackungsbehälter 2 somit eine Freistellung in Form eines stufenförmigen Absatzes aus, welche zusätzlich auch noch zur Erhöhung der Bodenfestigkeit des gesamten Kombi-Verpackungsbehälters 2, 2' dient.

Gerade bei sehr dünnwandig ausgebildeten Innenbehältern 3 ist die Durchführung der Dichteprüfung des Kombi-Verpackungsbehälters 2 bei befülltem sowie anschließend verschlossenem Innenraum als problematisch anzusehen, da der Innenbehälter 3 im Bereich seines Bodens 18 eine zu geringe Eigenstabilität aufweist. Diese Prüfung wird derart durchgeführt, dass im befüllten und verschlossenen Zustand der Kombi-Verpackungsbehälter 2 im Bereich seiner Behälterwand 14 mit einer radial darauf einwirkenden Druckkraft beaufschlagt wird und das Ausmaß der Verwölbung der Verschlussplatine im Bereich des offenen Endes 19 einen Hinweis für die korrekte Dichtheit und damit verbunden dem hermetischen Abschluss des Aufnahmeraums 21 darstellt. Dabei wird die Druckkraft bevorzugt diametral in die Behälterwand 14 eingeleitet. Bei einer zu geringen Festigkeit des Bodens 18 verwölbt sich dieser ebenfalls, wodurch es bei Kombi-Verpackungsbehälters 2 mit geringen Wandstärken des Innenbehälters 3 zu einem Ausscheiden von befüllten Verpackungsbehältern geführt hat, obwohl diese ordnungsgemäß dicht verschlossen waren. Dieser Nachteil wird gerade bei im Inline-Verfahren hergestellten Kombi-Verpackungsbehältern 2 durch den speziell ausgebildeten Übergangsabschnitt 31 im Bodenbereich vermieden. Der Übergangsabschnitt 31 führt zu einer ausreichenden Versteifung des Bodens 18, wodurch anschließend die Dichtheitsprüfung des befüllten und verschlossenen Kombi-Verpackungsbehälters 2 wieder ordnungsgemäß durchgeführt werden kann, ohne dass es zu einem Ausscheiden von ordnungsgemäß verschlossenen und dichten Behältern kommen kann.

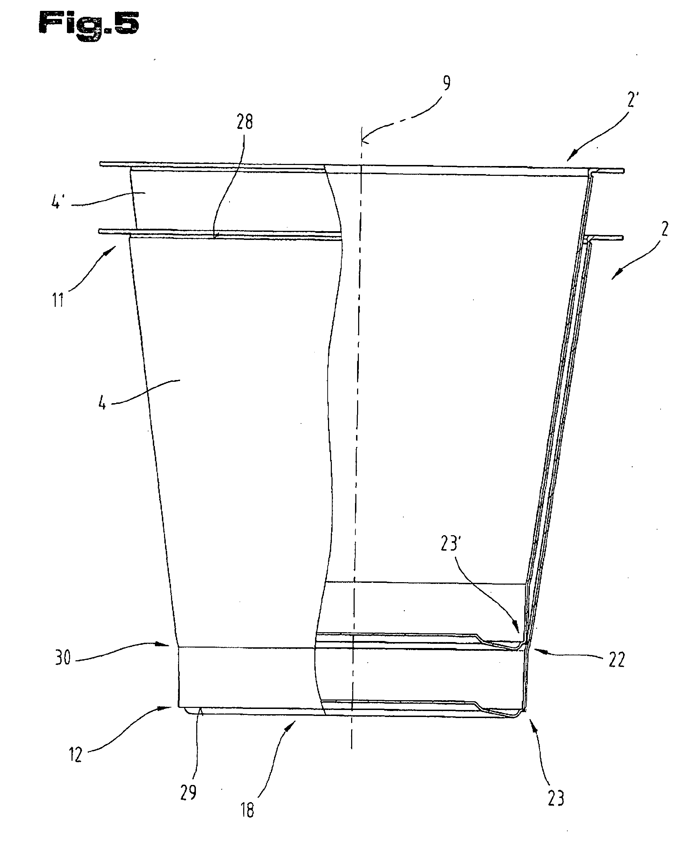

In der Fig. 5 ist eine Situation dargestellt, bei welcher zwei baugleiche Kombi-Verpackungsbehälter 2, 2' ineinander gestapelt worden sind. In diesem Zustand werden derartige Kombi-Verpackungsbehälter 2, 2' einer hier nicht näher dargestellten und beschriebenen Abfüllanlage zugeführt. Der hier untere Kombi-Verpackungsbehälter 2 nimmt den darin eingesteckten, weiteren Kombi-Verpackungsbehälter 2' auf. Das im Bereich der Einschnürung 30 ausgebildete, erste Stützmittel 22 dient dabei zur Abstützung des weiteren Stützmittels 23' des baugleich ausgebildeten Kombi-Verpackungsbehälters 2'. So kommt die hier untere Stirnseite 29 des Außenteils 4 an der nach innen ragenden Einschnürung 30 der Behälterwand 14 zur Anlage. Durch die zumeist scharfkantige Ausbildung der Stirnseite 29 des Außenteils 4 führt dies zu eindeutigen Abstützverhältnissen zwischen unmittelbar ineinander gestapelten Kombi-Verpackungsbehältern 2, 2'.

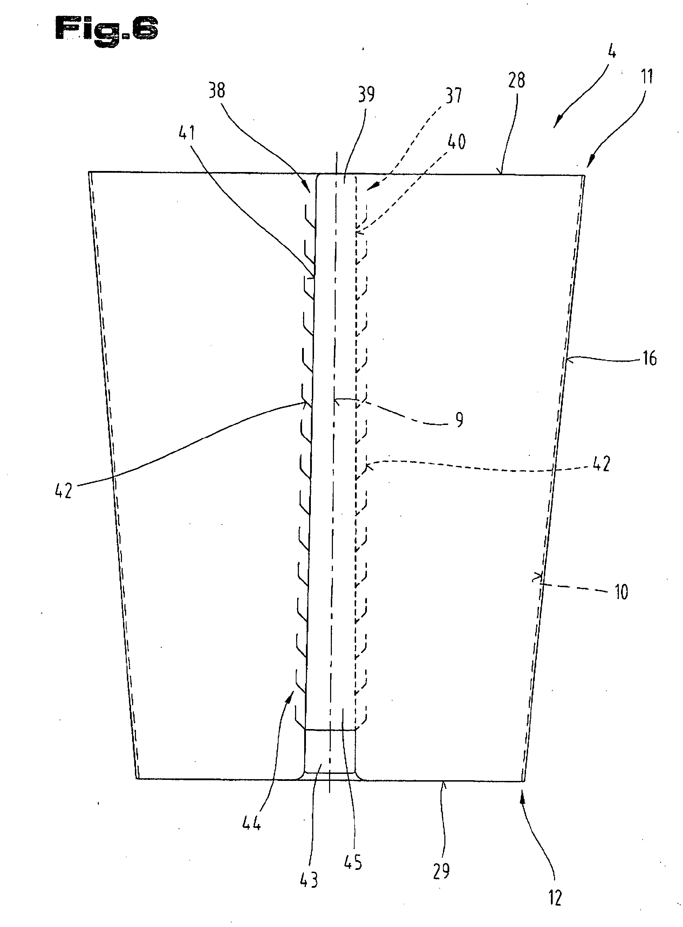

In der Fig. 6 ist noch das manschettenförmige Außenteil 4 gezeigt, welches aus einem zu einem Mantel gewickelten Zuschnitt gebildet ist. So ist hier das manschettenförmige Außenteil 4 in seiner unverformten Stellung noch vor dem Einlegen in die zuvor beschriebene Tiefziehform 1 gezeigt. Dabei wird das Außenteil 4 aus einem zumeist ebenflächigen Zuschnitt zu einem Mantel gewickelt. Durch das Wickeln des ebenflächigen Zuschnitts werden dann einander zugewendete Enden 37, 38 in einem vereinfacht dargestellten Überlappungsbereich 39 miteinander verbunden. Dies erfolgt durch eine sogenannte Überlappungsnaht. Das Wickeln sowie das anschließende Verbinden der beiden Enden 37, 38 kann dabei, wie dies bereits aus dem Stand der Technik hinlänglich bekannt ist, zum Beispiel durch Verkleben erfolgen. Als Beispiel wird hier auf die EP 0 408 515 B1 hingewiesen bzw. Bezug genommen.

Weiters ist auch noch vereinfacht dargestellt, dass an zumindest einer Längsseite 40, 41 des Überlappungsbereichs 39 im manschettenförmigen Außenteil 4 eine Materialschwächung, wie eine Einkerbung, Sicke oder eine hier dargestellte Perforation 42 angeordnet bzw. eingeformt ist. Die Materialschwächung, wie die Perforation 42, ist durch kurze, abgewinkelte Striche vereinfacht dargestellt und kann aber auch direkt im bzw. innerhalb des Überlappungsbereichs 39 angeordnet bzw. ausgebildet sein. Die zuvor beschriebene Perforation 42 dient zum Auftrennen des gewickelten Mantels des manschettenförmigen Außenteils 4. Um diese Öffnungsbewegung einfacher durchführen zu können, kann eine Aufrisslasche 43 vorgesehen sein.

Im vorliegenden Ausführungsbeispiel ist die bzw. sind die Perforationen 42 entlang der Längsseiten 40, 41 angeordnet, wobei dies in etwa dem Überlappungsbereich 39 entspricht. Es wäre aber auch möglich, die Perforation 42 bzw. die Perforationen 42 umfänglich distanziert vom Überlappungsbereich 39 vorzusehen. Es bildet bereits zumindest eine der Perforationen 42 einen Solltrennbereich 44 aus. Der Solltrennbereich 44 ist somit im Mantel des aus dem Zuschnitt gebildeten Außenteils 4 angeordnet.

Als Solltrennbereich 44 kann beispielsweise nur eine Reihe von hintereinander angeordneten Perforationen 42 dienen. Bevorzugt jedoch werden zwei in Umfangsrichtung voneinander distanziert angeordnete Reihen von Perforationen 42 zur Bildung des Solltrennbereichs 44 vorgesehen. Ist eine derartige Anordnung gewählt, bildet der Solltrennbereich 44 einen Aufrissstreifen 45 aus. Die zuvor beschriebene Aufrisslasche 43 dient zur Öffnung des Solltrennbereichs 44. Ist ein Aufrissstreifen 45 zur Bildung des Sollrennbereichs 44 vorgesehen, kann der Aufrissstreifen 45 auch noch die zuvor beschriebene Aufrisslasche 43 mit umfassen. Diese ist im hier vorliegenden Ausführungsbeispiel im Bereich des dem Boden 18 zugewendeten, weiteren Endbereichs 12 des manschettenförmigen Außenteils 4 angeordnet.

Bedingt durch die Anordnung der Aufrisslasche 43 in dem dem Boden zugewendeten weiteren Endbereich 12 des Außenteils 4, wird es für einen Benutzer möglich, den gesamten Kombi-Verpackungsbehälter 2 ausgehend von seinem offenen Ende 19 auf einer ebenen Unterlage aufzustellen und niederzudrücken. Anschließend kann mittels der Aufrisslasche 43 der Trennvorgang des Solltrennbereichs 44 erfolgen, bei welchem die Perforation 42 durchtrennt wird. So kann das manschettenförmige Außenteil 3 vom Innenbehälter 2 einfach abgelöst werden.

Die Anordnung der Aufrisslasche 43 im Bodenbereich des Kombi-Verpackungsbehälters 2, 2' ist gerade bei im Inline-Verfahren hergestellten Bechern vorteilhaft, da eine anliegende Anformung der Schicht 5 zur Bildung des Innenbehälters 3 an die Innenseite 10 des Außenteils 4 erfolgt. Da bei derartigen im Inline-Verfahren hergestellten Behältern bzw. Bechern mit relativ geringen Wandstärken das Auslangen gefunden werden kann, wird hier im oberen Endbereich 11 des Außenteils 4 keine unnötige, weitere Verformung der Schicht 5 während der Herstellung des Innenbehälters 3 bewirkt.

Würde die Aufrisslasche 43 in dem dem Flansch 20 zugewendeten Endbereich 11 vorgesehen sein, kann dies beim Öffnen des Kombi-Verpackungsbehälters 2, 2' aufgrund der weiteren und zusätzlichen Dehnung bei der Umformung der Schicht 5 zu einer zu großen Schwächung führen. Bei der Öffnungsbewegung der hier nicht näher dargestellten Verschlussplatine, wenn deren Betätigungslasche im Bereich des Flansches 20 auch noch deckungsgleich zur Aufrisslasche 43 des Aufrissstreifens 45 angeordnet sein würde, kann dies dazu führen, dass ein Übergangsbereich zwischen dem Flansch 20 und dem Behältermantel 17 des Innenbehälters 3 einreißt bzw. vollständig abreist.

Durch das Vorsehen der Aufrisslasche 43 im Bodenbereich 13 führt dies zu keiner unnötigen, weiteren Festigkeitseinbuße des Innenbehälters 3, insbesondere im Übergangsbereich zwischen dem Flansch 20 und dem Behältermantel 17.

Wie nun weiters noch in der Fig. 3 zu ersehen ist, kann das Erfassen sowie das Greifen der Aufrisslasche 43 noch dadurch erleichtert werden, wenn zwischen der Innenseite 10 des Außenteils 4 und dem Behältermantel 17 eine in den Behältermantel 17 eingeformte und in Richtung auf die Längsachse 9 rückspringende Vertiefung 46 ausgebildet ist. Diese Vertiefung 46 dient dazu, die Aufrisslasche 43 vom Behältermantel 17 freizustellen, wodurch diese für den Ablösevorgang leichter erfasst werden kann.

Da die Herstellung dieses Kombi-Verpackungsbehälters 2, 2' bevorzugt im Inline-Verfahren erfolgt, ist hier in der Tiefziehform 1 eine entsprechende Vorrichtung zur Bildung der Vertiefung 46 vorzusehen. Das Außenteil 4 ist dann in entsprechender Orientierung mit seiner Aufrisslasche 43 einzulegen, wobei für den Herstellvorgang des Innenbehälters 3 ein nicht näher dargestellter Formteil in den Formhohlraum 6 hineinragt. Dieser Formteil drückt den unteren Endbereich 12 des Außenteils 4 an die Formwand 7, 7' an. Anschließend daran erfolgt die Herstellung des Innenbehälters 3, ausgehend von der Schicht 5. Während dieses Herstellvorganges befindet sich der Formteil in einer in den Formhohlraum 6 hinein verstellten Stellung. Bei der Ausbildung des Innenbehälters 3 wird ein Teil des Behältermantels 17 um diesen Formteil herum angeformt, wodurch sich die zuvor beschriebene Vertiefung 46 zwischen der Aufrisslasche 43 und dem Behältermantel 17 ausbildet.

Der Ordnung halber sei abschließend darauf hingewiesen, dass zum besseren Verständnis des Aufbaus des Kombi-Verpackungsbehälters 2, 2' dieser bzw. dessen Bestandteile teilweise unmaßstäblich und/oder vergrößert und/oder verkleinert dargestellt wurden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Kombi-Verpackungsbehälters 2, 2', wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch die vorliegende Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

### Bezugszeichenaufstellung

| | | | |
|---|---|---|---|
| 1 | Tiefziehform | 36 | Wandabschnitt |
| 2, 2' | Kombi-Verpackungsbehälter | 37 | Ende |
| 3 | Innenbehälter | 38 | Ende |
| 4 | Außenteil | 39 | Überlappungsbereich |
| 5 | Schicht | 40 | Längsseite |
| | | | |
| 6 | Formhohlraum | 41 | Längsseite |
| 7, 7' | Formwand | 42 | Perforation |
| 8 | Formstempel | 43 | Aufrisslasche |
| 9 | Längsachse | 44 | Solltrennbereich |
| 10 | Innenseite | 45 | Aufrissstreifen |
| | | | |
| 11 | Endbereich (oben) | 46 | Vertiefung |
| 12 | Endbereich (unten) | | |
| 13 | Bodenbereich | | |
| 14 | Behälterwand | | |
| 15 | Absatz | | |
| | | | |
| 16 | Außenseite | | |
| 17 | Behältermantel | | |
| 18 | Boden | | |
| 19 | Offenes Ende | | |
| 20 | Flansch | | |
| | | | |
| 21 | Aufnahmeraum | | |
| 22 | Stützmittel | | |
| 23 | Stützmittel | | |
| 24 | Wandabschnitt | | |
| 25 | Aufstandsfläche | | |
| | | | |
| 26 | Distanz | | |
| 27 | Unterseite | | |
| 28 | Stirnseite | | |
| 29 | Stirnseite | | |
| 30 | Einschnürung | | |
| | | | |
| 31 | Übergangsabschnitt | | |
| 32 | Stufe | | |
| 33 | Stufenfläche | | |
| 34 | Verbindungswandteil | | |
| 35 | Bodenabschnitt | | |

## Patentansprüche

1. Kombi-Verpackungsbehälter (2, 2') umfassend einen becherförmigen Innenbehälter (3) mit einem Behältermantel (17), einem Boden (18) und mit einem im Bereich seines offenen Endes (19) den Behältermantel (17) nach außen überragenden Flansch (20), wobei der Behältermantel (17) eine sich zwischen dem Boden (18) und dem offenen Ende (19) erstreckende Längsachse (9) definiert und zumindest ein Teilabschnitt des Bodens (18) eine Aufstandsfläche (25) bildet, ein den Innenbehälter (3) an seinem Behältermantel (17) umgebendes manschettenförmiges Außenteil (4) mit in Richtung der Längsachse (9) voneinander distanzierten Endbereichen (11, 12), bei dem der erste Endbereich (11) dem Flansch (20) und der weitere Endbereich (12) dem Boden (18) des Innenbehälters (3) zugewendet ist, wobei der Behältermantel (17) und das manschettenförmige Außenteil (4) eine Behälterwand (14) bilden, sowie erste Stützmittel (22) und damit zusammenwirkende weitere Stützmittel (23) zum Ineinanderstapeln von mehreren gleichartigen Kombi-Verpackungsbehältern (2, 2'), wobei in einem Übergangsabschnitt (31) zwischen dem Boden (18) und dem Behältermantel (17) ausgehend vom Behältermantel (17) eine in radialer Richtung auf die Längsachse (9) rückspringende sowie umfänglich durchgehende Stufe (32) mit einer dem Boden (18) zugewendeten Stufenfläche (33) ausgebildet ist, wobei die Stufenfläche (33) in axialer Richtung von der durch den Boden (18) gebildeten Aufstandsfläche (25) in Richtung auf das offene Ende (19) distanziert angeordnet ist und der weitere Endbereich (12) des manschettenförmigen Außenteils (4) im Bereich der Stufenfläche (33) endet, **dadurch gekennzeichnet, dass** dieser in einem Abschnitt der Behälterwand (14) eines Bodenbereichs (13) zumindest eine in Richtung auf die Längsachse (9) vorragende Einschnürung (30) aufweist, wobei die Einschnürung (30) sowohl am Außenteil (4) als auch am Behältermantel (17) ausgebildet ist und sich zwischen der Einschnürung (30) und den beiden Endbereichen (11, 12) jeweils ein erster sowie weiterer Wandabschnitt (24, 36) ausbildet und die beiden Wandabschnitte (24, 36) im Axialschnitt in etwa geradlinig verlaufend ausgebildet sind, wobei die Einschnürung (30) das erste Stützmittel (22) und der weitere Endbereich (12) des manschettenförmigen Außenteils (4) mit seiner dem Boden (18) zugewendeten Stirnseite (29) das weitere Stützmittel (23) bildet.

2. Kombi-Verpackungsbehälter (2, 2') nach Anspruch 1, **dadurch gekennzeichnet, dass** der Übergangsabschnitt (31) anschließend an die rückspringende Stufe (32) hin zum Boden (18) einen im Axialschnitt gerundet ausgebildeten Verbindungswandteil (34) umfasst.

3. Kombi-Verpackungsbehälter (2,2') nach Anspruch 1 oder 2, **dadurch gekennzeichnet, dass** der Boden (18) anschließend an den Verbindungswandteil (34) einen im Axialschnitt gesehen in Richtung auf das offene Ende (19) geneigt verlaufenden Bodenabschnitt (35) aufweist.

4. Kombi-Verpackungsbehälter (2, 2') nach einem der vorhergehenden Ansprüche, **dadurch gekennzeichnet, dass** das manschettenförmige Außenteil (4) zwischen seinen in Richtung der Längsachse (9) voneinander distanzierten Endbereichen (11, 12) einlagig ausgebildet ist.

5. Kombi-Verpackungsbehälter (2, 2') nach einem der vorhergehenden Ansprüche, **dadurch gekennzeichnet, dass** der Innenbehälter (3), insbesondere dessen Behältermantel (17), an einer Innenseite (10) des manschettenförmigen Außenteils (4) anliegend angeformt ist.

6. Kombi-Verpackungsbehälter (2,2') nach einem der vorhergehenden Ansprüche, **dadurch gekennzeichnet, dass** das manschettenförmige Außenteil (4) aus einem zu einem Mantel gewickelten Zuschnitt gebildet ist und dabei einander zugewendete Enden (37, 38) des Zuschnitts in einem Überlappungsbereich (39) miteinander verbunden sind und zumindest ein im Mantel des Außenteils (4) ausgebildeter Solltrennbereich (44) vorgesehen ist.

7. Kombi-Verpackungsbehälter (2, 2') nach Anspruch 6, **dadurch gekennzeichnet, dass** der Solltrennbereich (44) als Aufrissstreifen (45) ausgebildet ist.

8. Kombi-Verpackungsbehälter (2,2') nach Anspruch 6 oder 7, **dadurch gekennzeichnet, dass** der Solltrennbereich (44), insbesondere der Aufrissstreifen (45), eine Aufrisslasche (43) umfasst, welche im Bereich des dem Boden (18) zugewendeten weiteren Endbereichs (12) des manschettenförmigen Außenteil (4) angeordnet ist.

9. Kombi-Verpackungsbehälter (2,2') nach Anspruch 8, **dadurch gekennzeichnet, dass** zumindest im Bereich der Aufrisslasche (43) eine in den Behältermantel (17) eingeformte und in Richtung auf die Längsachse (9) rückspringende Vertiefung (46) ausgebildet ist.

## Claims

1. A combination packaging container (2, 2'), comprising a cup-shaped inner container (3) comprising a container jacket (17), a bottom (18) and comprising a flange (20), which projects beyond the container jacket (17) to the outside in the area of its open end (19), wherein the container jacket (17) defines a longitudinal axis (9), which extends between the bottom (18) and the open end (19), and at least one partial section of the bottom (18) forms a contact surface (25), a sleeve-shaped outer part (4), which surrounds the inner container (3) on the container jacket (17) thereof, comprising end areas (11, 12), which are spaced apart from one another in the direction of the longitudinal axis (9), in the case of which the first end area (11) faces the flange (20) and the further end area (12) faces the bottom (18) of the inner container (3), wherein the container jacket (17) and the sleeve-shaped outer part (4) form a container wall (14), as well as first support means (22) and further support means (23) interacting therewith for nesting a plurality of similar combination packaging containers (2, 2') inside one another, wherein a stage (32), which returns to the longitudinal axis (9) in radial direction and which is continuously circumferential, comprising a stage surface (33), which faces the bottom (18), is embodied in a transition section (31) between the bottom (18) and the container jacket (17), starting at the container jacket (17), wherein the stage surface (33) is arranged at a distance from the contact surface (25), which is formed by the bottom (18), in the direction of the open end (19) in axial direction and the further end area (12) of the sleeve-shaped outer part (4) ends in the area of the stage surface (33), **characterized in that**, in a section of the container wall (14) of a bottom area (13), said combination packaging container (2, 2') has at least one constriction (30), which projects in the direction towards the longitudinal axis (9) in a section of the container wall (14) of the bottom area (13), wherein the constriction (30) is embodied on the outer part (4) as well as on the container jacket (17) and that a first as well as a further wall section (24, 36) forms in each case between the constriction (30) and the two end areas (11, 12), and the two wall sections (24, 36) are embodied so as to run approximately rectilinearly in the axial section, wherein the constriction (30) forms the first support means (22) and, with its front side (29), which faces the bottom (18), the further end area (12) of the sleeve-shaped outer part (4) forms the further support means (23).

2. The combination packaging container (2, 2') according to claim 1, **characterized in that**, following the returning stage (32) all the way to the bottom (18), the transition section (31) comprises a connecting wall part (34), which is embodied so as to be rounded in axial section.

3. The combination packaging container (2, 2') according to claim 1 or 2, **characterized in that**, following the connecting wall part (34), the bottom (18) has a bottom section (35), which runs at an incline in the direction of the open end (19), viewed in axial section.

4. The combination packaging container (2, 2') according to one of the preceding claims, **characterized in that** the sleeve-shaped outer part (4) is embodied in one layer between its end areas (11, 12), which are spaced apart from one another in the direction of the longitudinal axis (9).

5. The combination packaging container (2, 2') according to one of the preceding claims, **characterized in that** the inner container (3), in particular the container jacket (17) thereof, is integrally molded to an inner side (10) of the sleeve-shaped outer part (4) so as to rest against it.

6. The combination packaging container (2, 2') according to one of the preceding claims, **characterized in that** the sleeve-shaped outer part (4) is formed from a cut, which is wound to form a jacket, and ends (37, 38) of the cut, which face one another, are thereby connected to one another in an overlap area (39) and that provision is made for at least one target separating area (44), which is embodied in the jacket of the outer part (4).

7. The combination packaging container (2, 2') according to claim 6, **characterized in that** the target separating area (44) is embodied as tear strip (45).

8. The combination packaging container (2, 2') according to claim 6 or 7, **characterized in that** the target separating area (44), in particular the tear strip (45), comprises a tear tab (43), which is arranged in the area of the further end area (12) of the sleeve-shaped outer part (4), which faces the bottom (18).

9. The combination packaging container (2, 2') according to claim 8, **characterized in that** a depression (46), which is molded into the container jacket (17) and which returns in the direction towards the longitudinal axis (9), is embodied at least in the area of the tear tab (43).

## Revendications

1. Récipient d'emballage combiné (2, 2') comprenant un récipient interne en forme de gobelet (3) avec une enveloppe de récipient (17), un fond (18) et une bride (20) dépassant vers l'extérieur de l'enveloppe de récipient (17) au niveau de son extrémité ouverte (19), l'enveloppe de récipient (17) définissant un axe longitudinal (9) s'étendant entre le fond (18) et l'extrémité ouverte (19) et au moins une portion du fond (18) formant une surface d'appui (25), une partie extérieure en forme de manchon (4) entourant le récipient interne (3) au niveau de son enveloppe de récipient (17), avec des zones d'extrémité (11, 12) distantes entre elles en direction de l'axe longitudinal (9), la première zone d'extrémité (11) étant orientée vers la bride (20) et l'autre zone d'extrémité (12) étant orientée vers le fond (18) du récipient interne (3), l'enveloppe de récipient (17) et la partie extérieur en forme de manchon (4) formant une paroi de récipient (14), ainsi que des premiers moyens d'appui (22) et des moyens d'appui supplémentaires (23) interagissant avec ceux-ci pour l'emboîtement de plusieurs récipients d'emballage combinés (2, 2'), un épaulement (32), en retrait dans la direction radiale vers l'axe longitudinal (9) et continu sur la périphérie, avec une surface d'épaulement (33) orientée vers le fond (18), étant prévu dans une portion de transition (31) entre le fond (18) et l'enveloppe de récipient (17), à partir de l'enveloppe de récipient (17), la surface d'épaulement (33) étant disposée à une certaine distance, dans la direction axiale, de la surface d'appui (25) formée par le fond (18) en direction de l'extrémité ouverte (19) et la zone d'extrémité supplémentaire (12) de la partie extérieure en forme de manchon (4) se terminant au niveau de la surface d'épaulement (33), **caractérisé en ce que** cette zone d'extrémité supplémentaire comprend, dans une portion de la paroi du récipient (14) d'une zone de fond (13), au moins un rétrécissement (30) dépassant en direction de l'axe longitudinal (9), ce rétrécissement (30) étant formé aussi bien au niveau de la partie externe (4) qu'au niveau de l'enveloppe du récipient (17) et une première portion de paroi et une portion de paroi supplémentaire (24, 36) s'étendant entre le rétrécissement (30) et les deux zones d'extrémité (11, 12) et les deux portions de paroi (24, 36) présentant une coupe axiale s'étendant approximativement en ligne droite, le rétrécissement (30) formant le premier moyen d'appui (22) et la zone d'extrémité supplémentaire (12) de la partie externe en forme de manchon (4) formant, avec sa face frontale (29) orientée vers le fond (18), le moyen d'appui supplémentaire (23).

2. Récipient d'emballage combiné (2, 2') selon la revendication 1, **caractérisé en ce que** la portion de transition (31) comprend, à la suite de l'épaulement en retrait (32), en direction du fond (18), une partie de paroi de liaison (34) présente une coupe axiale arrondie.

3. Récipient d'emballage combiné (2, 2') selon la revendication 1 ou 2, **caractérisé en ce que** le fond (18) comprend, à la suite de la partie de paroi de liaison (34), une portion de fond (35) s'étendant, en vue en coupe axiale, de manière inclinée en direction de l'extrémité ouverte (19).

4. Récipient d'emballage combiné (2, 2') selon l'une des revendications précédentes, **caractérisé en ce que** la partie externe en forme de manchon (4) est constituée d'une seule couche entre ses zones d'extrémité (11, 12) distantes entre elles en direction de l'axe longitudinal (9).

5. Récipient d'emballage combiné (2, 2') selon l'une des revendications précédentes, **caractérisé en ce que** le récipient interne (3), plus particulièrement son enveloppe de récipient (17), est formé de façon à s'appuyer contre une face interne (10) de la partie externe en forme de manchon (4).

6. Récipient d'emballage combiné (2, 2') selon l'une des revendications précédentes, **caractérisé en ce que** la partie externe en forme de manchon (4) est constituée d'une découpe enroulée en une enveloppe et des extrémités (37, 38), orientées entre elles, de la découpe étant reliées entre elles dans une zone de chevauchement (39) et au moins une zone de rupture prédéterminée (44) formée dans l'enveloppe de la partie externe (4) étant prévue.

7. Récipient d'emballage combiné (2, 2') selon la revendication 6, **caractérisé en ce que** la zone de rupture prédéterminée (44) est constituée d'une bande déchirable (45).

8. Récipient d'emballage combiné (2, 2') selon la revendication 6 ou 7, **caractérisé en ce que** la zone de rupture prédéterminée (44), plus particulièrement la bande déchirable (45), comprend une patte déchirable (43) qui est disposée au niveau de la zone d'extrémité supplémentaire (12), orientée vers le fond (18), de la partie externe en forme de manchon (4).

9. Récipient d'emballage combiné (2, 2') selon la revendication 8, **caractérisé en ce que**, au moins au niveau de la patte déchirable (43), un creux (46) formé dans l'enveloppe du récipient (17) et en retrait en direction de l'axe longitudinal (9) est prévu.
